# EUROPEAN PATENT APPLICATION

(11) **EP 0 945 484 A1**
(43) Date of publication of application: **29.09.1999**
(21) Application number: 99301868.8
(22) Date of filing: 11.03.1999
(51) Int. Cl.: C08K 13/02, C08L 27/06

(54) **Synergistic blend of a metal-based stabilizer or Lewis acid and a free mercaptan for enhanced PVC stabilization**

(30) Priority: 26.03.1998 US 48492; 17.06.1998 US 98758
(71) Applicant: MORTON INTERNATIONAL, INC., Chicago, Illinois 60606 (US)
(72) Inventor: Duvall, Tod Charles, West Chester, Ohio 45069 (US); Norris, Gene Kelly, Cincinnati, Ohio 45249 (US); Adams, Paul Brian, Indian Springs, Ohio 45011 (US)
(74) Representative: Bankes, Stephen Charles Digby

(57) **Abstract**

Compositions comprising halogen-containing polymers such as PVC resins are stabilized against heat by a synergistic combination of a free mercaptan and a metal-based stabilizer and/or a Lewis acid such as zinc chloride.

## Description

### FIELD OF THE INVENTION

This invention relates to a heat stabilized halogen-containing polymer composition normally susceptible to heat-induced deterioration which comprises a free mercaptan in combination with a very low level of a Lewis acid or metal-based stabilizer. The combination is an excellent heat stabilizer when used as the sole stabilizing additive in the polymer composition. This invention relates particularly to the stabilization against heat of vinyl chloride polymer compositions and to articles of manufacture such as rigid pipe, flexible film and window profile that are prepared from such heat-stabilized vinyl chloride polymer compositions.

### BACKGROUND OF THE INVENTION

It is well known that the physical properties of various organic polymers deteriorate and color changes take place during processing of the polymer and during exposure of formed polymer products to certain environments. Halogen-containing polymers are normally susceptible to heat-induced deterioration through autoxidation. The prime examples of such polymers are the vinyl polymers in which the halogen is attached directly to carbon atoms. Poly(vinyl chloride) and copolymers of vinyl chloride and vinyl acetate are the most familiar polymers which require stabilization for their survival during fabrication into pipe, window casings, siding, bottles, tubing, and the like. When such polymers are processed at elevated temperatures, undesirable color changes often occur within the first 5 to 10 minutes and continue during later stages of the processing. Haziness, which sometimes accompanies the color changes, is particularly undesirable where clear products are needed. The addition of heat stabilizers to such polymers has been absolutely essential to the wide-spread utility of the polymers. From a great deal of work in the development of more and more effective heat stabilizers there has emerged two principal classes: organotin compounds and mixed metal combinations. Organotin-based heat stabilizers have been the most efficient and widely used stabilizers for rigid PVC. Synergistic combinations of alkyltin mercaptides and free mercaptans are particularly efficient heat stabilizers for rigid PVC during extrusion. They have not been entirely satisfactory, however, and are not typically used in flexible PVC.

The stabilization of halogen-containing polymer compositions normally susceptible to heat-induced deterioration by a combination of a Lewis acid at a very low concentration and the degradation products of a latent mercaptan during processing of the polymer composition at an elevated temperature, which products include a liberated mercaptan, is taught in co-pending, commonly assigned patent application Serial No. 08/890,613, filed July 9, 1997, which is incorporated herein by reference.

Although the combination of a latent mercaptan and a Lewis acid is very beneficial because of the absence of offensive odor and the oxidative stability of the latent mercaptan, the cost of the latent mercaptan is not justified in certain applications where an unblocked mercaptan would give satisfactory performance in combination with a Lewis acid.

### SUMMARY OF THE INVENTION

It is an object of this invention, therefore, to provide a cost competitive heat stabilizer for a halogen-containing polymer having the synergy of a metal-based stabilizer and/or Lewis acid with such a liberated mercaptan.

It is a related object cf this invention to stabilize rigid, semi-rigid, and flexible PVC resin compositions with a heat stabilizer composition of this invention.

It is still another object of this invention to provide a flexible PVC composition and article stabilized against heat by a synergistic combination of a free mercaptan and a metal-based stabilizer and/or a Lewis acid.

These and other objects of the invention which will become apparent from the following description are achieved by adding a free mercaptan and a synergistic amount of a metal-based stabilizer and/or Lewis acid to a composition comprising a halogen-containing polymer before processing the composition at an elevated temperature.

### DETAILED DESCRIPTION OF THE INVENTION

As used herein, the term halogen-containing organic polymers as used herein means halogen-containing polymers or resins in which the halogen is attached directly to the carbon atoms. The halogen-containing polymers which can be stabilized according to this invention include chlorinated polyethylene having 14 to 75%, e.g. 27%, chlorine by weight, chlorinated natural and synthetic rubber, rubber hydrochloride, chlorinated polystyrene, chlorinated polyvinyl chloride, polyvinyl bromide, polyvinyl fluoride, and vinyl chloride polymers. PVC composition means a composition comprising a vinyl chloride polymer. As used herein, the term alkyl means a saturated monovalent straight or branched chain hydrocarbon radical containing from 1 to 20 carbon atoms. The term "free mercaptan" means a mercaptan which has not been liberated from a latent mercapatan during the PVC processing. The word "substantially" means largely if not wholly that which is specified but so close to it that the difference is inconsequential.

Metal-based stabilizers are defined for the purposes of this invention as being tin-free metal salts. For the purposes of this invention, metal salts are defined to include oxides, hydroxides, sulfides, sulfates, chlorides, bromides, fluorides, iodides, phosphates, phenates, perchlorates, carboxylates, and carbonates. The metal salt stabilizers are exemplified by zinc, barium, strontium, calcium, magnesium, cobalt, nickel, titanium, antimony, and aluminum salts of phenols, aromatic carboxylic acids, fatty acids, epoxidized fatty acids, oxalic acid, acetic acid, and carbonic acid. Calcium stearate, calcium 2-ethylhexanoate, calcium octanoate, calcium oleate, calcium ricinoleate, calcium myristate, calcium palmitate, calcium laurate, barium laurate, barium stearate, barium di(nonylphenolate), magnesium stearate, zinc octanoate (or caprylate), zinc 2-ethylhexanoate, zinc stearate, zinc laurate, zinc oxide, zinc hydroxide, zinc sulfide, and Group I and II metal soaps in general are examples of suitable salts along with aluminum stearate and hydrotalcite. The synergistic amount of the metal-based stabilizer is between about 0.01 and 0.5%, preferably 0.02-0.4%, and more preferably 0.03-0.1% by weight of the halogen containing resin. The zinc salts are much preferred because they provide not only dynamic stability to the heat processed resin but also superior color hold properties in comparison with the other metal salts, especially at very low concentrations such as from 0.03 to 0.1 %.

The Lewis acids are exemplified by boron trifluoride, aluminum chloride, zinc chloride and methyltin trichloride. The synergistic amounts of the Lewis acids for the purposes of this invention are between about 0.005 and 0.5%, preferably from about 0.01, more preferably from about 0.03, to about 0.1 % by weight of the halogen-containing resin. The Lewis acids and the metal-based stabilizers may be used in combination.

The vinyl chloride polymers are made from monomers consisting of vinyl chloride alone or a mixture of monomers comprising, preferably, at least about 70% by weight of vinyl chloride, based on the total monomer weight. Examples of the copolymers include those made from vinyl chloride and from about 1 to about 30% of a copolymerizable ethylenically unsaturated material such as vinyl acetate, vinyl butyrate, vinyl benzoate, vinylidene chloride, diethyl fumarate, diethyl maleate, other alkyl fumarates and maleates, vinyl propionate, methyl acrylate, 2-ethylhexyl acrylate, butyl acrylate and other alkyl acrylates, methyl methacrylate, ethyl methacrylate, butyl methacrylate and other alkyl methacrylates, methyl alpha-chloroacrylate, styrene, trichloroethylene, vinyl ethers such as vinyl ethyl ether, vinyl chloroethyl ether and vinyl phenyl ether, vinyl ketones such as vinyl methyl ketone and vinyl phenyl ketone, 1-fluoro-2-chloroethylene, acrylonitrile, chloroacrylonitrile, allylidene diacetate and chloroallylidene diacetate. Typical copolymers include vinyl chloride-vinyl acetate (96:4 sold commercially as VYNW), vinyl chloride-vinyl acetate (87:13), vinyl chloride-vinyl acetate-maleic anhydride (86:13:1), vinyl chloride-vinylidene chloride (95:5); vinyl chloride-diethyl fumarate (95:5), and vinyl chloride 2-ethylhexyl acrylate (80:20).

A rigid PVC composition of this invention is one which does not contain a plasticizer. A semi-rigid PVC composition of this invention is one which contains from 1 to about 25 parts of a plasticizer per 100 parts by weight of the vinyl chloride polymer. A flexible PVC composition of this invention contains from about 25 to about 100 parts of a conventional plasticizer per hundred parts of the vinyl chloride polymer. Alkyl esters of carboxylic acids in which there are from 1 to 3 alkyl groups having from 8 to 12 carbon atoms are representative of such plasticizers. The alkyl group may be n-octyl, 2-ethylhexyl, nonyl, decyl, or dodecyl. Suitable esters include phthalates, trimellitates, benzoates, adipates, glutarates, and sebacates. The plasticizer may also be a pentaerythritol or such an ester thereof. A polymeric plasticizer is also suitable.

The mercaptans that are suitable for the purposes of this invention are well-known compounds and include alkyl mercaptans, mercapto esters, mercapto alcohols, thioglycerols, and mercapto acids. See, for example, U.S. Patent Nos. 3,503,924 and 3,507,827, which are incorporated herein by reference. Alkyl mercaptans having from 1 to about 200 carbon atoms and from 1 to 4 mercapto groups are suitable. Among the useful mercaptan-containing organic compounds are those having structures illustrated by the following formulas: 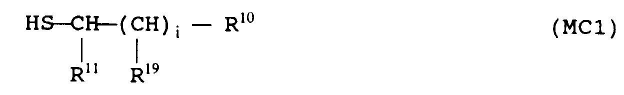 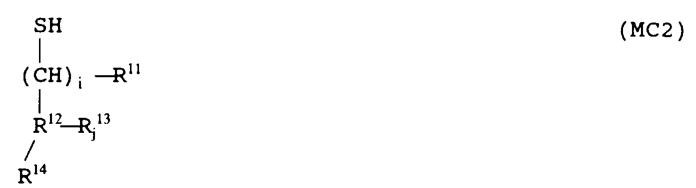 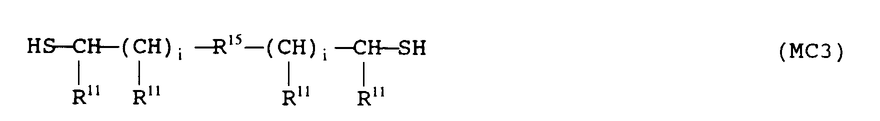 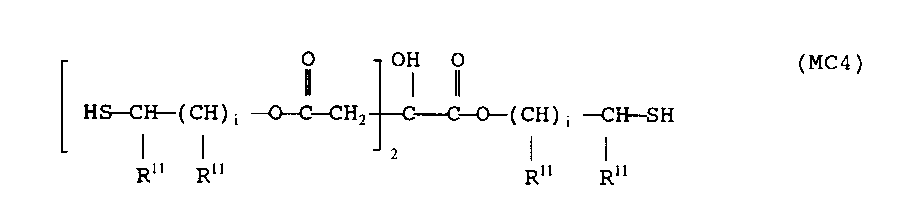 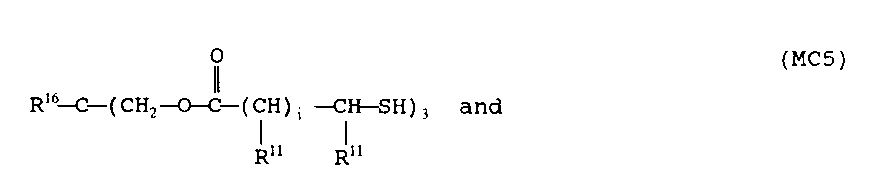 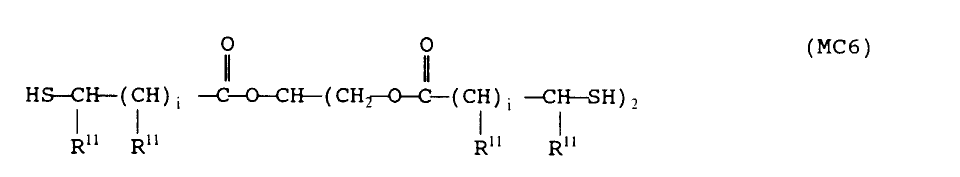 wherein R¹⁰ and R¹⁹ are the same or different and are 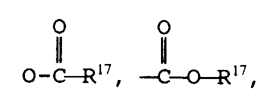 -OH, -SH, aryl, C₁ to C₁₈ alkyl, or -H;
R¹¹ is -H, aryl, or C₁ to C₁₈ alkyl;
R¹² is cycloalkyl, cycloalkenyl or phenyl;
R¹³ is 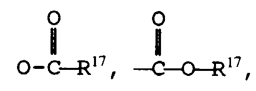 -SH, aryl, C₁ to C₁₈ alkyl, -OH or -H with the proviso that in formula (MC2) when R¹² is phenyl, R¹³ is -OH and i=0, then the -SH groups are on non-adjacent carbon atoms;
R¹⁴ is -H or a divalent group which may contain halogen, hydroxy, mercapto or alkyl substituents and which when R¹² is phenyl combines with the phenyl to form a naphthalene ring; R¹⁵ is 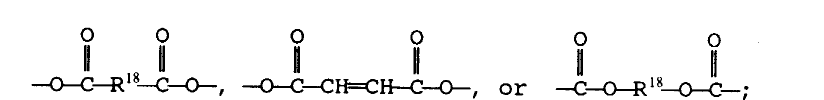
R¹⁶ is -CH₃ , -CH₂CH₃ , or 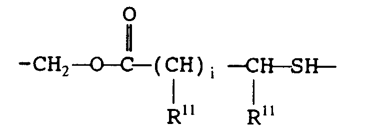
R¹⁷ is -H, or alkyl, alkenyl, aryl, aralkyl, alkaryl, cycloalkyl, cycloalkylenyl;
R¹⁸ is arylene, C₁ to C₈ alkylenyl, 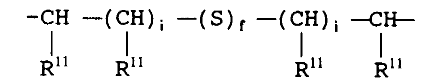 or

   -(CH₂ -CH₂ -O)_{b} -CH₂ -CH₂ -
wherein b is an integer from 1 to 6;
i=0 or an integer from 1 to 6 inclusive;
j=0-4; and
f=1 or 2.

Mercaptan-containing organic compounds preferred in this invention are those compounds according to formula (MC1) where R¹¹ is -H, R¹⁹ is -H, R¹⁰ is OH or 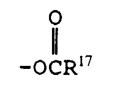 and i=1; those compounds according to formula (MC2) where R¹² is phenyl, R¹¹ is -H, R¹³ is -H, R¹⁴ is -H, i=1, and j=1; those compounds according to formula (MC3) where R¹¹ is -H, R¹⁵ is 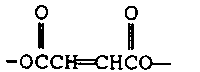 and i=1; those compounds according to formula (MC4) where R¹¹ is -H and i=1; those compounds according to formula (MC5) where R¹⁶ is -C₂H₅ or 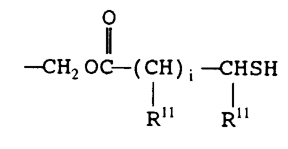 R¹¹ is -H and i=0 or 1; and those compounds according to formula (MC6) where R¹¹ is -H and i=1.

Examples of the mercaptan-containing organic compounds described by formula (MC1) include, but are not limited to, the following compounds:

HSC₁₂H₂₅

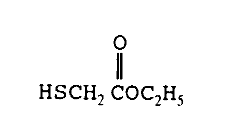

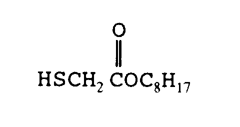

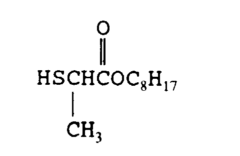

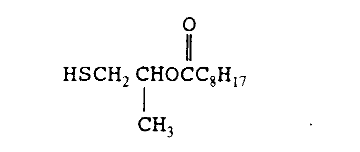

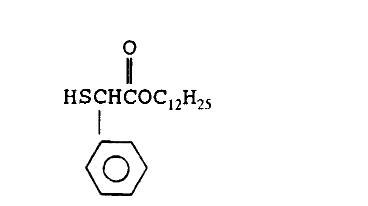

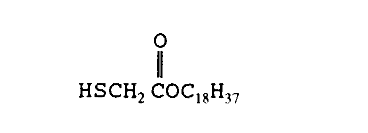

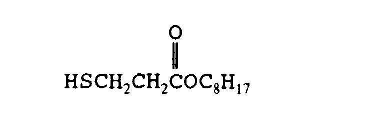

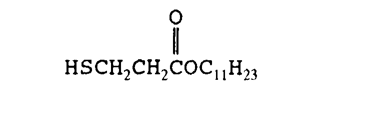

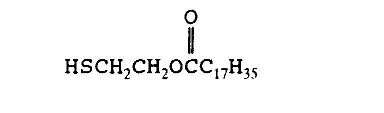

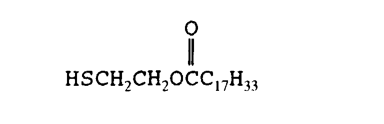

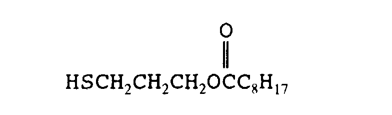

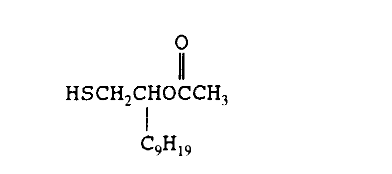

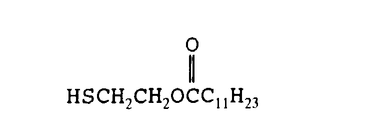

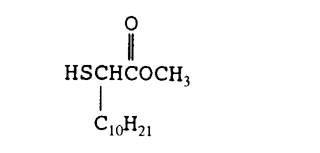

HSCH₂CH₂OH

HSCH₂CH₂CH₂OH

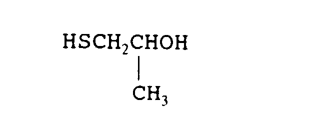

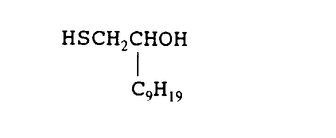

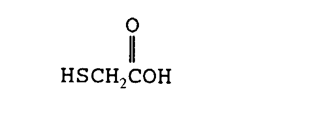

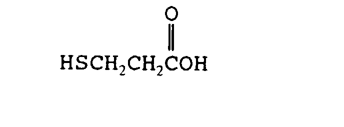

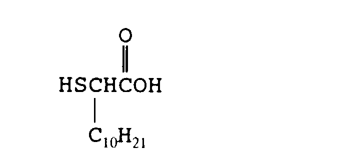

Examples of the mercaptan-containing organic compounds described by formula (MC2) include, but are not limited to, the following compounds:

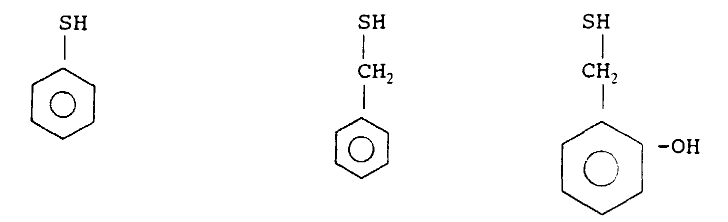

Examples of mercaptan-containing organic compounds represented by formula (MC3) include, but are not limited to the following compounds:

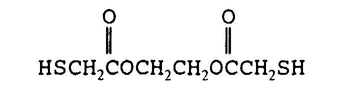

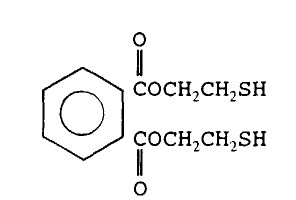

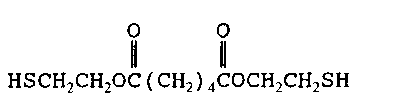

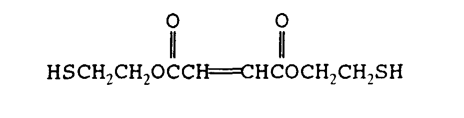

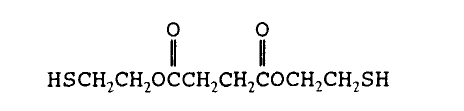

The mercaptan-containing organic compounds described by formula (MC4) are exemplified by, but are not limited to, the following:

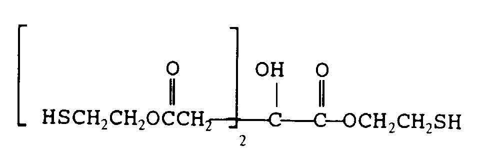

The mercaptan-containing organic compounds represented by formula (MC5) are exemplified by, but are not limited to, the following:

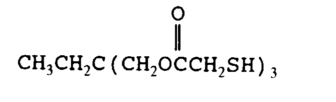

The mercaptan-containing organic compounds represented by formula (MC6) are exemplified by, but are not limited to, the following:

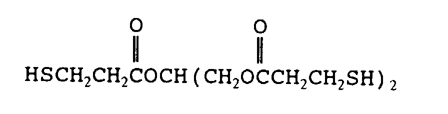

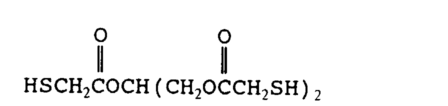

The free mercaptans are employed in this invention in an amount sufficient to impart the desired resistance to heat deterioration to halogen-containing organic polymers. It will be readily apparent to one of ordinary skill in the art, that the precise amount of stabilizer composition used will depend upon several factors, including, but not limited to, the particular halogen-containing organic polymer employed, the temperature to which the polymer will be subjected, and the possible presence of other stabilizing compounds. In general, the more severe the conditions to which the halogen-containing organic polymer is subjected, and the longer the term required for resisting degradation, the greater will be the amount of stabilizer composition required. Generally, as little as about 0.10 part by weight of the free mercaptan per hundred parts by weight of the halogen-containing polymer will be effective. While there is no critical upper limit to the amount of free mercaptan which can be employed, amounts of about 3.0 parts or less by weight per hundred parts of the polymer are preferred.

The synergistic amount of the metal-based stabilizer is between about 0.01 and 0.5%, preferably from about 0.01 to about 0.4%, and more preferably from about 0.03 to about 0.1% by weight of the halogen containing resin. The synergistic amount of the Lewis acids for the purposes of this invention is between about 0.005 and 0.5%, preferably from about 0.01, more preferably from about 0.03, to about 0.1 % by weight of the halogen-containing resin. The zinc-based stabilizers (e.g., a carboxylate or the chloride) are much preferred because they provide not only dynamic stability to the heat processed resin but also superior color hold properties in comparison with the other stabilizers, especially at very low concentrations such as from 0.03 to 0.1 %.

The stabilizer compositions of this invention are particularly suited to impart superior stabilization against the deteriorative effects of heat and ultra-violet light on PVC resins in comparison with stabilizer compositions previously known in the art. They consist essentially of from about 10 % to about 99 %, preferably from about 85 to about 97 %, by weight of free mercaptan, based on the total weight of the stabilizer composition, the balance comprising the metal-based stabilizer and/or Lewis acid. They may be prepared by blending the components thereof in any convenient manner which produces a homogeneous mixture, such as by shaking or stirring in a container. Likewise, the stabilizer compositions of this invention can be incorporated in semi-rigid and flexible PVC resins by admixing the components of the stabilizer composition and of the resin composition, such as, for example, in an appropriate mill or mixer or by any other of the well-known methods which provide uniform distribution of the stabilizer throughout the resin composition.

Conventional non-metallic stabilizers and antioxidants can also be included in the PVC compositions of the present invention. Thus, there can be included 0.01-0.75 %, based on the weight of the resin, of sulfur containing compounds such as dilauryl-thiodipropionate, distearyl 3,3'-thiodipropionate, dicyclohexyl-3,3-thiodipropionate, dioleyl-3,3'-thiodipropionate, dibenzyl-3,3'-thiodipropionate, didecyl-3,3'-thiodipropionate, dibenzyl-3,3'-thiodipropionate, and diethyl-3,3'-thiopropionate.

An antioxidant may be added in an amount of 0.01-10%, preferably 0.1-5% by weight of the PVC resin. Phenolic antioxidants are particularly suitable and are exemplified by 2,6-di-t-butyl-p-cresol, butylated hydroxyanisole, propyl gallate, 4,4'-thiobis(6-t-butyl-m-cresol), 4,4'-cyclohexylidene diphenol, 2,5-di-t-amyl hydroquinone, 4,4'-butylidene bis(6-t-butyl-m-cresol), hydroquinone monobenzyl ether, 2,2'-methylene-bis(4-methyl-6-t-butyl phenol), 2,6-butyl-4-decyloxy phenol, 2-t-butyl-4-dodecyloxy phenol, 2-t-butyl-4-dodecyloxy phenol, 2-t-butyl-4-octadecyloxy phenol, 4,4'-methylene-bis(2,6-di-t-butyl phenol), p-amino phenol, N-lauryloxy-p-amino phenol, 4,4'-thiobis(3-methyl-6-t-butyl phenol), bis [o-(1,1,3,3-tetramethyl butyl)phenol] sulfide, 4-acetyl-β-resorcylic acid, A-stage p-t-butylphenolformaldehyde resin, 4-dodecyloxy-2-hydroxybenzophenone, 3-hydroxy-4-(phenylcarbonyl) phenyl palmitate, n-dodecyl ester of 3-hydroxy-4-(phenyl carbonyl) phenoxyacetic acid, and t-butyl phenol.

From 0.01-30% by weight of an epoxy compound, based on the weight of the vinyl chloride polymer in the PVC compositions of this invention may also be used. Examples of such epoxy compounds include epoxidized soya bean oil, epoxidized lard oil, epoxidized olive oil, epoxidized linseed oil, epoxidized castor oil, epoxidized peanut oil, epoxidized corn oil, epoxidized tung oil, epoxidized cottonseed oil, epichlorhydrin/bis-phenol A resins, phenoxy-propylene oxide, butoxypropylene oxide, epoxidized neopentylene oleate, glycidyl epoxystearate, epoxidized α-olefins, epoxidized glycidyl soyate, dicyclopentadiene dioxide, epoxidized butyl toluate, styrene oxide, dipentene dioxide, glycidol, vinyl cyclo-hexene dioxide, glycidyl ether of resorcinol, glycidol ether of hydroquinone, glycidyl ether of 1,5-dihyroxynaphthalene, epoxidized linseed oil fatty acids, allyl glycidyl ether, butyl glycidyl ether, cyclohexane oxide, 4-(2,3-epoxypropoxy) aceto-phenone, mesityl oxide epoxide, 2-ethyl-3-propyl glycidamide, glycidyl ethers of glycerine, pentaerythritol and sorbitol, and 3,4-epoxycyclohexane-1, 1-dimethanol bis-9,10-epoxystearate.

Likewise there can be used organic phosphites in an amount of 0.01 to 10%, preferably 0.1-5% by weight of the vinyl chloride polymer. The organic phosphites contain one or more, up to a total of three, aryl, alkyl, aralkyl and alkaryl groups, in any combination. The term "trialkylaryl" is inclusive of alkyl, aryl, alkaryl and aralkyl phosphites containing any assortment of alkyl, aryl, alkaryl and aralkyl groups. Exemplary are triphenyl phosphite, tricresyl phosphite, tri(dimethylphenyl) phosphite, tributyl phosphite, trioctyl phosphite, tridodecyl phosphite, octyl diphenyl phosphite, dioctyl phenyl phosphite, tri(octyl-phenyl) phosphite, tri(nonylphenyl) phosphite, tribenzyl phosphite, butyl dicresyl phosphite, octyl di(octyl-phenyl) phosphite, tri(2-ethyl-hexyl) phosphite, tritolyl phosphite, tri(2-cyclohexylphenyl) phosphite, tri-alpha-naphthyl phosphite, tri(phenylphenyl) phosphite, and tri(2-phenylethyl) phosphite.

Likewise there can be included from 0.01-10% by weight of the vinyl chloride polymer of a polyol stabilizer for vinyl chloride resins. Thus there can be included glycerol, sorbitol, pentaerythritol, mannitol, and polyethers such as diethylene glycol, triethylene glycol, tetraethylene glycol, tripropylene glycol, and the like.

Nitrogen containing stabilizers such as dicyandiamide, melamine, urea, formoguanamine, dimethyl hydantoin, guanidine, thiourea, 2-phenylindoles, aminocrotonates, N-substituted maleimides, uracil, uracil derivatives such as the pyrrolodiazine diones described in published European Patent Application No. EP-736569 by Ciba-Geigy A.G., and the 1,3-dialkyl-6-amino-uracils described in German Offen. DE 19,741,778 by Ciba Specialty Chemicals Holding Inc., and the like also can be included in amounts of 0.1-10% by weight.

In addition to the stabilizers of this invention, the polymer compositions of this invention may contain conventional additives such as pigments, fillers, blowing agents, dyes, ultraviolet light absorbing agents, densifying agents, and lubricants such as low molecular weight polyethylene, i.e. polyethylene wax, fatty acid amides, e.g. lauramide and stearamide, bisamides, e.g. decamethylene, bis amide, and fatty acid esters, e.g. butyl stearate, glyceryl stearate, linseed oil, palm oil, decyloleate, corn oil, cottonseed oil, hydrogenated cottonseed oil, montan wax, stearic acid, calcium stearate, mineral oil, and oxidized polyethylene, etc.

The following examples further illustrate the preparation of stabilizer compositions of this invention, and the advantages of said stabilizer compositions.

### EXAMPLE 1 and Comparative Example 1

In these examples, the stabilizing activity of the combination of a free mercaptan and a metal salt is compared with that of a combination of the same metal salt and a latent mercaptan known as 2-S-(tetrahydropyranyl)mercaptoethyltallate which is made by the addition of 2-mercaptoethyltallate to 3,4-dihydropyran. The amounts of the free mercaptan and of the latent mercaptan impart an equal sulfhydryl content to the examples. Accordingly, flexible PVC compositions containing:

| INGREDIENT | AMOUNT |
|---|---|
| PVC resin (k=70) | 100.0 parts |
| Diisodecyl phthalate | 40.0 phr |
| Epoxidized soybean oil | 5.0 phr |
| Stearic acid | 0.2 phr |
| Oxidized polyethylene | 0.2 phr |
| Zinc octanote (18% Zn) | 0.05 phr |

and either 1.7 phr of 2-mercaptoethyltallate (Example 1) or 2.0 phr of the latent mercaptan (Comparative Example 1) were processed using a Brabender PLASTICORDER rheometer at 200°C (392°F)/80rpm with chips taken at two minute intervals to a maximum of 18 minutes. The color properties of the chips were measured using a Hunter Labs Colorimeter (L, a, b) and the dE was selected as the measurement for comparison in Table I.

**TABLE I**

| PVC Color Hold (dE) Minutes | | | | | | | | | |
|---|---|---|---|---|---|---|---|---|---|
| Time\ Ex. | 2 | 4 | 6 | 8 | 10 | 12 | 14 | 16 | 18 |
| 1 | 31.5 | 29.8 | 30.6 | 31.9 | 33.8 | 37.2 | 40.7 | 47.3 | 83.3 |
| CE 1 | 30.7 | 31.2 | 31.6 | 32.6 | 34.8 | 38.3 | 41.6 | 44.1 | 77.6 |

### EXAMPLES 2 and 3 and Comparative Example 2

In these examples, the flexible PVC compositions were the same as in Example 1 and CE 1 except that the plasticizer was dioctyl phthalate and equal weights (2 phr) of the free mercaptans and latent mercaptan were used and the free mercaptan in Example 2 is thioglycolic acid. The compositions were tested as in Example 1 except that the test was extended to 24 minutes. The results are given in Table 2.

**Table 2**

| PVC Color Hold (dE) Minutes | | | | | | | | | | | | |
|---|---|---|---|---|---|---|---|---|---|---|---|---|
| Time\ Ex. | 2 | 4 | 6 | 8 | 10 | 12 | 14 | 16 | 18 | 20 | 22 | 24 |
| 2 | 25.7 | 25.8 | 25.7 | 26.4 | 26.6 | 28.6 | 29.8 | 31.2 | 34.0 | 35.9 | 37.8 | 44.6 |
| 3 | 26.1 | 26.1 | 26.9 | 28.0 | 29.4 | 30.6 | 32.2 | 33.2 | 34.4 | 35.5 | 38.6 | 39.5 |
| CE2 | 26.3 | 25.9 | 26.7 | 27.7 | 29.2 | 30.6 | 32.4 | 32.7 | 33.6 | 33.9 | 34.0 | 54.3 |

### EXAMPLE 4

In this example, the flexible PVC composition is the same as in Example 1 except that the zinc octanoate is replaced by zinc chloride.

Articles of manufacture contemplated by this invention, e.g., pipe, tubing, and window profile, are formed from the stabilized compositions of this invention by any of the well-known conventional techniques for forming polymers into shaped articles.

## Claims

1. A composition comprising a halogen-containing polymer, a free mercaptan and between 0.005 and 0.5 %, based on the weight of the polymer, of at least one stabilizer selected from metal-based stabilizers and Lewis acids.

2. A composition according to claim 1 wherein the amount of stabilizer is from 0.01 to 0.4%, preferably from 0.03 to 0.1%.

3. A composition according to claim 1 or claim 2 wherein the Lewis acid is zinc chloride.

4. A composition according to any preceding claim wherein the stabilizer comprises a zinc carboxylate.

5. A composition according to any preceding claim wherein the halogen-containing polymer is a semi-rigid or flexible PVC.

6. A composition according to any one of claims 1 to 4 wherein the halogen-containing polymer is a rigid PVC.

7. A composition according to any preceding claim wherein the mercaptan is 2-mercaptoethyltallate.

8. A composition according to any one of claims 1 to 6 wherein the free mercaptan is thioglycolic acid.

9. A composition for stabilizing a halogen-containing polymer consisting essentially of from 10 % to 99% by weight of a free mercaptan and at least one stabilizer selected from metal-based stabilizers and Lewis acids as the remainder.

10. A composition according to claim 9 wherein the stabilizer is zinc chloride.
